# EUROPÄISCHE PATENTSCHRIFT

(11) **EP 2 808 582 B1**
(45) Veröffentlichungstag und Bekanntmachung des Hinweises auf die Patenterteilung: **10.07.2019**
(21) Anmeldenummer: 14170200.1
(22) Anmeldetag: 28.05.2014
(51) Int. Cl.: F16H 57/08, H02K 7/116

(54) **Planetengetriebe eines Kraftfahrzeugaktuators**
Planetary gear of a motor vehicle actuator
Engrenage épicycloïdal d'un actionneur de véhicule automobile

(30) Priorität: 29.05.2013 DE 102013105527
(43) Veröffentlichungstag der Anmeldung: 03.12.2014
(73) Patentinhaber: Küster Holding GmbH, 35630 Ehringshausen (DE)
(72) Erfinder: Kremer, Viktor, 35444 Biebertal (DE); Keller, Oliver, 56477 Nister-Möhrendorf (DE)
(74) Vertreter: Müller, Eckhard

(56) Entgegenhaltungen:
- WO-A1-2006/094804
- WO-A1-2011/076366
- DE-A1-102006 007 755
- US-A1- 2010 304 918

## Beschreibung

Die Erfindung betrifft ein Planetengetriebe eines Kraftfahrzeugaktuators mit einem Planetenträger gemäß dem Oberbegriff des Anspruchs 1.

Aus dem Stand der Technik ist bereits eine Vielzahl von Planetengetrieben bekannt, die in Fahrzeugaktuatoren eingesetzt werden. Ein Planetengetriebe der eingangs genannten Art ist beispielsweise aus der US 2010/304918 A1 bekannt, welches die Merkmale des Oberbegriffs des Anspruchs 1 zeigt.

Die Planetengetriebe der eingangs genannten Art weisen einen Planetenträger auf, der zum Halten von Planetenrädern dient und mit der Abtriebswelle gekoppelt ist. Die Planetenräder stehen mit einem Sonnenritzel in Eingriff. In den bekannten Kraftfahrzeugaktuatorplanetengetrieben nach DE 10 2006 007 755 A1 und DE 10 2006 049 229 A1 besteht der Planetenträger aus Kunststoff und die Abtriebswelle aus Metall. Bei höheren zu übertragenden Drehmomenten besteht das Problem, dass sich der Planetenträger so stark verformt, dass eine Überdeckung einer Planetenradverzahnung zu einem Getriebegehäuse nicht mehr sichergestellt ist. Dabei kommt eine ganzmetallische Ausführung des Planetenträgers als Kaltfliespressteil nicht in Betracht, da dieses aus umformtechnischer Sicht nicht herstellbar ist. Eine alleinige Ausbildung des Planetenträgers als Druckgussbauteil kommt ebenfalls nicht in Frage, da dieses die an die Abtriebswelle abzugebenden Drehmomente nicht übertragen kann.

Die Aufgabe der Erfindung besteht daher darin, ein Planetengetriebe mit den Merkmalen des Oberbegriffs des Anspruchs 1 bereitzustellen, mittels dem hohe Drehmomente übertragen werden können und mittels dem sich dabei das Risiko einer Beschädigung des Planetenträgers, insbesondere des Verbindungsmittels, verringert.. Diese Aufgabe wird gelöst durch ein Planetengetriebe mit den Merkmalen des Anspruchs 1. Vorteilhafte Ausgestaltungen sind Gegenstand der Unteransprüche.

Dabei weist der Planetenträger des Planetengetriebes einen Planetenhalter zum Halten von Planetenrädern und ein mit dem Planetenhalter drehfest verbundenes Verbindungsmittel zum Koppeln des Planetenhalters mit einer Abtriebswelle auf. Der Planetenhalter besteht aus einem steiferen Material als das Verbindungsmittel. In erfindungswesentlicher Weise umschließt zudem dabei das Verbindungsmittel den Planetenhalter vollständig.

Der Vorteil eines derart ausgebildeten Planetenträgers besteht darin, dass durch das Vorsehen des steiferen Planetenhalters die Deformation des Verbindungsmittels verhindert wird. Dadurch ist erreicht, dass die Planetenräder auch bei hohen Drehmomenten mit einer Verzahnung eines Getriebegehäuses in Eingriff sind. Des Weiteren ist eine Übertragung von hohen Drehmomenten auf die Abtriebswelle ohne eine Beschädigung des Planetenträgers, insbesondere des Verbindungsmittels, möglich. Durch das Vorsehen eines derartigen Planetenhalters kann somit ein Planetenträger mit hoher Stabilität realisiert werden. Dadurch, dass das Verbindungsmittel den Planetenhalter vollständig umschließt, kann zusätzlich sichergestellt werden, dass eine Übertragung des Drehmoments von dem Planetenhalter auf das Verbindungsmittel über eine große Übertragungsfläche erfolgt. Dadurch verringert sich weiter das Risiko einer Beschädigung des Planetenträgers, insbesondere des Verbindungsmittels.

Im Sinne der Erfindung ist als Steifigkeit der Widerstand des Körpers zu verstehen, den dieser einer Verformung durch eine Kraft oder ein Drehmoment entgegensetzt. Dies bedeutet, dass sich in der erfindungsgemäßen Ausführung der Planetenhalter erst bei einer höheren Kraft oder Drehmoment verformt als das Verbindungsmittel. Der Planetenträger kann die Abtriebswelle aufweisen. Die Abtriebswelle des Planetenträgers kann mit einer weiteren Welle und/oder einem Bauteil gekoppelt werden.

Das Verbindungsmittel kann, insbesondere vollständig, aus Kunststoff bestehen. Der Planetenhalter kann, insbesondere vollständig, aus Metall bestehen.

Vorzugsweise weist der Planetenträger einen, insbesondere vollständig, aus Metall bestehende Abtriebswelle und ein Verbindungsmittel auf, das mit dem Planetenhalter und der Abtriebswelle drehfest verbunden ist. Der Planetenträger besitzt einen, insbesondere vollständig, aus Metall bestehenden Planetenhalter zum Halten von Planetenrädern. Das Verbindungsmittel besteht, insbesondere vollständig, aus Kunststoff. Das Verbindungsmittel kann mit der Abtriebswelle und dem Planetenhalter jeweils unmittelbar verbunden sein.

Ein Vorteil des Vorsehens eines aus Kunststoff bestehenden Verbindungsmittels und eines aus Metall bestehenden Planetenhalters besteht darin, dass dadurch auf einfache Weise eine Verbindung zwischen dem Planetenhalter und der Abtriebswelle realisiert werden kann. Insbesondere kann dadurch eine Verbindung realisiert werden, mittels der hohe Drehmomente auf die Abtriebswelle übertragen werden können, ohne dass eine Beschädigung des Planetengetriebes, insbesondere des Planetenträgers, erfolgt.

Das aus Kunststoff bestehende Verbindungsmittel kann eine geringere Steifigkeit aufweisen als der aus Metall bestehende Planetenhalter.

Insbesondere kann das Verbindungsmittel mit dem Planetenhalter, insbesondere unmittelbar, formschlüssig verbunden sein. Die Verbindung zwischen dem Planetenhalter und dem Verbindungsmittel kann unlösbar sein. Dies bedeutet, dass nach einem Verbinden des Planetenhalters mit dem Verbindungsmittel die Verbindung nicht gelöst werden kann, ohne ein oder beide Bauteile zu beschädigen. Durch die formschlüssige Verbindung kann sichergestellt werden, dass eine Übertragung des Drehmoments von dem Planetenhalter auf das Verbindungsmittel über eine große Übertragungsfläche erfolgt. Dadurch verringert sich das Risiko einer Beschädigung des Planetenträgers, insbesondere des Verbindungsmittels.

Das Verbindungsmittel kann mit der Abtriebswelle formschlüssig verbunden sein. Insbesondere kann das Verbindungsmittel einen Abtriebswellenfuß der Abtriebswelle, insbesondere vollständig, umschließen. Die Verbindung zwischen dem Verbindungsmittel und der Abtriebswelle kann unlösbar sein. Dies bedeutet, dass nach einem Verbinden des Verbindungsmittels mit dem Abtriebswellenfuß die Verbindung nicht gelöst werden kann, ohne ein oder beide Bauteile zu beschädigen. Das Vorsehen einer formschlüssigen Verbindung zwischen dem Verbindungsmittel und der Abtriebswelle bietet den Vorteil, dass die Drehmomentübertragung von dem Verbindungsmittel auf die Abtriebswelle auf einfache und sichere Weise erfolgt.

Das Verbindungsmittel kann ein Gußteil, insbesondere ein Spritzgußteil sein. Der Planetenhalter und/oder die Abtriebswelle, insbesondere der Abtriebswellenfuß, können in das Gußteil eingelassen sein. Im Ergebnis kann ein einstückiger, unlösbarer Planetenträger auf einfache Weise und kostengünstig hergestellt werden. Ein von dem Verbindungsmittel vorstehender Teil der Abtriebswelle kann mehrkantig ausgebildet sein. Bei dem mehrkantigen Teil kann es sich um einen Aussensechsrund bzw. Torx handeln.

In einer besonderen Ausführung kann der Planetenhalter ringförmig ausgebildet sein. Der Planetenhalter kann wenigstens eine Verzahnung aufweisen. Die Verzahnung kann sich von einer Ringinnenseite des Planetenhalters in Richtung zu einer Mittelachse des Planetenhalters erstrecken. Das Verbindungsmittel kann eine mit der Verzahnung in Eingriff befindliche Gegenverzahnung aufweisen. Die Gegenverzahnung kann sich beim Umspritzen oder Umgießen des Planetenhalters ausbilden.

Der Planetenhalter kann wenigstens eine Aufnahme zum Aufnehmen einer Planetenachse aufweisen. Ein Planetenrad kann sich um die Planetenachse drehen und kann über die Planetenachse unmittelbar mit dem Planetenhalter verbunden sein. Zum Verbinden der Planetenachse mit dem Planetenhalter kann diese in die Aufnahme eingepresst sein. Dies bedeutet, dass im Gegensatz zu dem aus dem Stand der Technik bekannten Ausführungen die Planetenachse in der erfindungsgemäßen Ausführung nicht mehr aufwändig in die Aufnahme eingegossen werden muss.

Ferner kann die Planetenachse einstichfrei ausgebildet sein. Die Einstiche werden im Stand der Technik zur Erhöhung der Befestigung der eingegossenen Planetenachsen mit der Aufnahme benötigt. Durch das Vorsehen des Einstichs sind in den bekannten Ausführungen die Herstellungskosten für die Planetenachse und/oder die Aufnahme im Planetenhalter hoch. Da in der erfindungsgemäßen Ausführung kein Einstich mehr notwendig ist, ist erreicht, dass die Herstellungskosten gering sind. Insbesondere ist erreicht, dass die Herstellungskosten des erfindungsgemäßen Planetenträgers mit Planetenhalter fast genauso hoch sind wie die aus dem Stand der Technik bekannten Planetenträger, die vollständig aus Kunststoff bestehen. Im Ergebnis wird erfindungsgemäß eine verbesserte Funktion bei gleichen Herstellungskosten erreicht. Als Einstich wird im Sinne der Erfindung eine Aussparung, insbesondere eine umlaufende Nut, bezeichnet.

Die Planetenachsen können von dem Verbindungsmittel vorstehen. Insbesondere können die Planetenachsen von einer anderen Seite des Verbindungsmittels vorstehen als die Abtriebswelle. Daher können sich die Planetenachsen in eine andere Richtung erstrecken als die Abtriebswelle.

In einer besonderen Ausführung kann der Planetenhalter wenigstens zwei Aufnahmen zur jeweiligen Aufnahme einer Planetenachse aufweisen. Ein radialer Abstand zwischen der wenigstens zwei Aufnahmen und einer Mittelachse des Planetenhalters kann unterschiedlich sein. So kann sich ein radialer Abstand zwischen einer ersten Aufnahme und der Mittelachse des Planetenhalters von einem radialen Abstand zwischen einer zweiten Aufnahme und der Mittelachse des Planetenhalters unterscheiden, Infolge der unterschiedlichen Abstände zwischen den Aufnahmen und der Mittelachse können mit einem einzigen Planetenhalter unterschiedliche Übersetzungen realisiert werden.

Es zeigen:
- Fig. 1:: eine Explosionsdarstellung des Planetenträgers mit einem Planetenhalter eines Planetengetriebes gemäß einer ersten Ausführung,
- Fig. 2:: eine perspektivische Darstellung des Planetenträgers von oben mit dem Planetenhalter gemäß der ersten Ausführung,
- Fig. 3:: eine perspektivische Darstellung des Planetenträgers von unten mit dem Planetenhalter gemäß der ersten Ausführung,
- Fig. 4:: eine Schnittansicht von unten auf den Planetenträger mit dem Planetenhalter gemäß der ersten Ausführung,
- Fig. 5: eine Draufsicht auf einen Planetenhalter gemäß einer zweiten Ausführung.

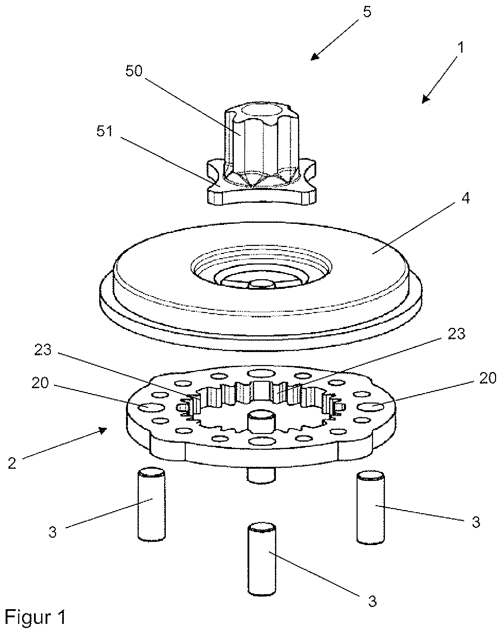

Ein in Figur 1 gezeigter Planetenträger 1 weist einen Planetenhalter 2 gemäß einer ersten Ausführung, ein Verbindungsmittel 4 und eine Abtriebswelle 5 auf. Der Planetenhalter 2 ist ringförmig ausgebildet und weist eine Vielzahl von in Umfangsrichtung des Planetenhalters 2 zueinander benachbarten Aufnahmen 20 auf. Die Aufnahmen 20 dienen zum Aufnehmen von Planetenachsen 3. Dabei sind die Planetenachsen 3 in die Aufnahmen 20 eingepresst. An den Planetenachsen 3 sind in den Figuren nicht dargestellte Planetenräder angebracht.

Ferner weist der Planetenhalter 2 an einer der nicht dargestellten Mittelachse des Planetenhalters 2 zugewandten Seite mehrere Verzahnungsbereiche 23 auf, die in Umfangsrichtung des Planetenhalters 2 benachbart zueinander angeordnet sind. Der Planetenhalter 2 ist aus Metall gefertigt.

In der Figur 1 ist nur ein Teil des Verbindungsmittels 4, nämlich der obere Teil des Verbindungsmittels 4 dargestellt. Das Verbindungsmittel 4 besteht, insbesondere vollständig, aus Kunststoff und ist derart ausgebildet, dass es den Planetenhalter 2, insbesondere vollständig, umschließt. Das Verbindungsmittel 4 ist mit dem Planetenhalter 2 drehfest, insbesondere unmittelbar, verbunden. Zudem ist das Verbindungsmittel 4 mit der Abtriebswelle 5 drehfest, insbesondere unmittelbar, verbunden.

Die Abtriebswelle 5 weist einen mehrkantigen Bereich 50 und einen Fußbereich 51 auf. Der Fußbereich 51 ist im Querschnitt größer ausgebildet als der mehrkantige Bereich. Die Abtriebswelle 5 ist im Fußbereich 51 mit dem Verbindungsmittel 4 unmittelbar verbunden. Der mehrkantige Bereich 50 der Abtriebswelle 5 kann mit einer nicht dargestellten Welle oder nicht dargestellten Bereich verbunden werden. Dagegen sind der Planetenhalter 2 und die Abtriebswelle 5 nicht unmittelbar miteinander verbunden. Das Verbindungsmittel 4 ist ein Gußteil. Dieses wird durch Umgießen bzw. Umspritzen des Planetenhalters 2 und des Fußbereichs 51 der Abtriebswelle 5 erzeugt.

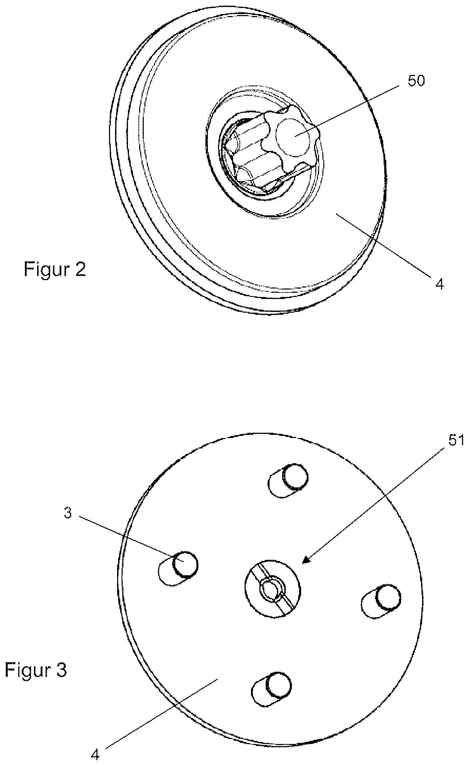

Wie aus Figur 2 ersichtlich ist, ragt in einem verbundenen Zustand des Verbindungsmittels 4 mit dem Planetenhalter 2 der mehrkantige Bereich 50 der Abtriebswelle 5 von dem Verbindungsmittel 4 hervor. Aus Figur 3 ist zu entnehmen, dass die in die Aufnahmen 20 eingepressten Planetenachsen 3 aus dem Verbindungsmittel 4 herausragen. An diesen herausragenden Abschnitten der Planetenachsen 3 werden die nicht dargestellten Planetenräder angebracht. Die Planetenachsen 3 ragen von dem Verbindungsmittel 4 in eine andere Richtung vor als die Abtriebswelle 4. In Figur 3 wird die in Figur 1 nicht enthaltene Seite des Verbindungsmittels 4 dargestellt. Der Planetenhalter 2 ist in das Verbindungsmittel 4 vollständig eingelassen. Ferner ist der Fußbereich 51 der Abtriebswelle 5 in das Verbindungsmittel 4 eingelassen.

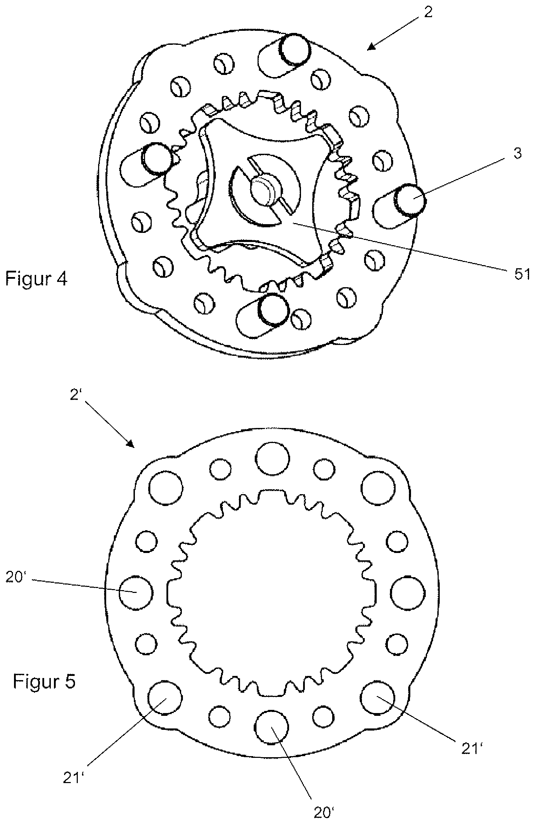

Die Abtriebswelle 5 steht nicht in unmittelbarem Eingriff mit dem Planetenhalter 2, wie aus Figur 4 ersichtlich ist. Die Verbindung zwischen der Abtriebswelle 5 und dem Planetenhalter 2 erfolgt durch das Verbindungsmittel 4, das unter anderem in dem in Figur 4 dargestellten Zwischenraum zwischen der Abtriebswelle 5 und dem Planetenhalter 2 vorgesehen ist.

Figur 5 zeigt einen Planetenhalter 2' gemäß einer zweiten Ausführung. Im Folgenden wird nur auf die Unterschiede zwischen dem in Figur 5 und den in den Figuren 1 bis 4 gezeigten Planetenhalter 2 eingegangen, wobei gleiche Bauteile mit den gleichen Bezugszeichen versehen sind.

Der in Figur 5 dargestellte Planetenhalter 2' weist zwei verschiedene Aufnahmearten 20' 21' aus. Eine erste Aufnahmeart weist eine Vielzahl von ersten Aufnahmen 20' auf, die bezüglich einer nicht dargestellten Mittelachse des Planetenhalters 2' in radialer Richtung gleich weit entfernt sind. Die ersten Aufnahmen 20' sind in Umfangsrichtung benachbart zueinander angeordnet.

Eine zweite Aufnahmeart weist eine Vielzahl von zweiten Aufnahmen 21' auf, die bezüglich der Mittelachse des Planetenhalters 2' ebenfalls in radialer Richtung gleich weit entfernt angeordnet sind. Auch die zweiten Aufnahmen 21' sind in Umfangsrichtung benachbart zueinander angeordnet. Dabei ist der radiale Abstand der ersten Aufnahmen 20' bezüglich der Mittelachse des Planetenhalters 2' größer als der radiale Abstand der zweiten Aufnahmen 21' bezüglich der Mittelachse des Planetenhalters 2'.

### Bezugszeichenliste

- 1: Planetenträger
- 2: Planetenhalter gemäß erster Ausführung
- 2': Planetenhalter gemäß zweiter Ausführung
- 3: Planetenachse
- 4: Verbindungsmittel
- 5: Abtriebswelle
- 20: Aufnahme
- 20': erste Aufnahmeart
- 21': zweite Aufnahmeart
- 23: Verzahnungsbereich
- 50: mehrkantiger Bereich
- 51: Abtriebswellenfuß

## Patentansprüche

1. Planetengetriebe eines Kraftfahrzeugaktuators mit einem Planetenträger (1), der einen Planetenhalter (2, 2') zum Halten von Planetenrädern und ein mit dem Planetenhalter (2, 2') drehfest verbundenes Verbindungsmittel (4) aufweist, ,
wobei der Planetenhalter (2, 2') aus einem steiferen Material besteht als das Verbindungsmittel (4), wobei sich der Planetenhalter erst bei einer höheren Kraft oder Drehmoment verformt, als das Verbindungsmittel, **dadurch gekennzeichnet, dass** das Verbindungsmittel (4) den Planetenhalter (2, 2')vollständig umschließt und den Planetenhalter (2, 2') mit einer Abtriebswelle (5) verbindet.

2. Planetengetriebe nach Anspruch 1, **dadurch gekennzeichnet, dass** das Verbindungsmittel (4), aus Kunststoff besteht.

3. Planetengetriebe nach Anspruch 1 oder 2, **dadurch gekennzeichnet, dass** der Planetenhalter (2, 2') aus Metall besteht.

4. Planetengetriebe nach einem der Ansprüche 1 bis 3, **dadurch gekennzeichnet, dass** der Planetenträger (1) eine aus Metall bestehende Abtriebswelle (5) aufweist, wobei das Verbindungsmittel (4) mit dem Planetenhalter (2, 2') und der Abtriebswelle (5) drehfest verbunden ist, und der Planetenträger (1) einen aus Metall bestehenden Planetenhalter (2, 2') zum Halten von Planetenrädern aufweist und das Verbindungsmittel (4) aus Kunststoff ist.

5. Planetengetriebe nach einem der vorhergehenden Ansprüche, **dadurch gekennzeichnet, dass** der Planetenhalter (2, 2') ringförmig ausgebildet ist.

6. Planetengetriebe nach einem der vorhergehenden Ansprüche, **dadurch gekennzeichnet, dass** der Planetenhalter (2, 2') mit dem Verbindungsmittel (4) formschlüssig verbunden ist.

7. Planetengetriebe nach einem der vorhergehenden Ansprüche, **dadurch gekennzeichnet, dass** der Planetenhalter (2, 2') wenigstens eine Verzahnung und das Verbindungsmittel (4) eine mit der Verzahnung in Eingriff befindliche Gegenverzahnung aufweist.

8. Planetengetriebe nach einem der vorhergehenden Ansprüche, **dadurch gekennzeichnet, dass** der Planetenhalter (2, 2') wenigstens eine Aufnahme (20, 20', 21') zum Aufnehmen einer Planetenachse (3) aufweist.

9. Planetengetriebe nach einem der vorhergehenden Ansprüche, **dadurch gekennzeichnet, dass** eine Planetenachse (3) in eine Aufnahme (20, 20', 21') des Planetenhalters (2, 2') eingepresst ist.

10. Planetengetriebe nach einem der vorhergehenden Ansprüche, **dadurch gekennzeichnet, dass** der Planetenhalter (2, 2') wenigstens zwei Aufnahmen (20', 21') zur jeweiligen Aufnahme einer Planetenachse (3) aufweist, wobei ein radialer Abstand zwischen einer ersten Aufnahme (20') und einer Mittelachse des Planetenhalters (2, 2') und ein radialer Abstand zwischen einer zweiten Aufnahme (21') und der Mittelachse des Planetenhalters (2, 2') unterschiedlich ist.

11. Planetengetriebe nach einem der Ansprüche 8 bis 10, **dadurch gekennzeichnet, dass** die Planetenachse (3) einstichfrei ausgebildet ist.

12. Planetengetriebe nach einem der vorhergehenden Ansprüche, **dadurch gekennzeichnet, dass** das Verbindungsmittel (4) ein Gußteil, insbesondere ein Spritzgußteil, ist und/oder das Verbindungsmittel (4) ein Gußteil ist, in das die Abtriebswelle (5) und/oder der Planetenhalter (2, 2') eingelassen sind.

13. Planetengetriebe nach einem der vorhergehenden Ansprüche, **dadurch gekennzeichnet, dass** das Verbindungsmittel (4) mit der Abtriebswelle (5), formschlüssig verbunden ist.

14. Planetengetriebe nach einem der vorhergehenden Ansprüche, **dadurch gekennzeichnet, dass** das Verbindungsmittel (4) einen Antriebswellenfuß (51) umschließt.

15. Planetengetriebe nach einem der vorhergehenden Ansprüche, **dadurch gekennzeichnet, dass** ein von dem Verbindungsmittel (4) vorstehender Teil der Abtriebswelle (5) mehrkantig ausgebildet ist.

16. Bremse, insbesondere Kraftfahrzeugbremse und/oder Feststellbremse, mit einem Planetengetriebe eines Kraftfahrzeugaktuators nach einem der vorhergehenden Ansprüche.

## Claims

1. Planetary gear of a motor vehicle actuator having a planet carrier (1), which has a planet holder (2, 2') for holding planet gears and a connecting means (4) rotationally fixedly connected to the planet holder (2, 2'),
the planet holder (2, 2') consisting of a stiffer material than the connecting means (4), the planet holder deforming only at a higher force or torque than the connecting means,
**characterized in that** the connecting means (4) encloses the planet holder (2, 2') completely and connects the planet holder (2, 2') to an output shaft (5).

2. Planetary gear according to Claim 1, **characterized in that** the connecting means (4) consists of plastic.

3. Planetary gear according to Claim 1 or 2, **characterized in that** the planet holder (2, 2') consists of metal.

4. Planetary gear according to one of Claims 1 to 3, **characterized in that** the planet carrier (1) has an output shaft (5) consisting of metal, the connecting means (4) being rotationally fixedly connected to the planet holder (2, 2') and the output shaft (5), and the planet carrier (1) has a planet holder (2, 2') consisting of metal for holding planetary gears, and the connecting means (4) is made of plastic.

5. Planetary gear according to one of the preceding claims, **characterized in that** the planet holder (2, 2') is annular.

6. Planetary gear according to one of the preceding claims, **characterized in that** the planet holder (2, 2') is connected to the connecting means (4) in a form-fitting manner.

7. Planetary gear according to one of the preceding claims, **characterized in that** the planet holder (2, 2') has at least one set of teeth and the connecting means (4) has a mating set of teeth in engagement with the set of teeth.

8. Planetary gear according to one of the preceding claims, **characterized in that** the planet holder (2, 2') has at least one receptacle (20, 20', 21') for receiving a planet shaft (3).

9. Planetary gear according to one of the preceding claims, **characterized in that** a planet shaft (3) is pressed into a receptacle (20, 20', 21') of the planet holder (2, 2').

10. Planetary gear according to one of the preceding claims, **characterized in that** the planet holder (2, 2') has at least two receptacles (20', 21') to respectively receive a planet shaft (3), a radial distance between a first receptacle (20') and a central axis of the planet holder (2, 2') and a radial distance between a second receptacle (21') and the central axis of the planet holder (2, 2') being different.

11. Planetary gear according to one of Claims 8 to 10, **characterized in that** the planet shaft (3) is formed without a puncture.

12. Planetary gear according to one of the preceding claims, **characterized in that** the connecting means (4) is a casting, in particular an injection- moulded part, and/or the connecting means (4) is a casting in which the output shaft (5) and/or the planet holder (2, 2') are embedded.

13. Planetary gear according to one of the preceding claims, **characterized in that** the connecting means (4) is connected to the output shaft (5) in a form-fitting manner.

14. Planetary gear according to one of the preceding claims, **characterized in that** the connecting means (4) encloses a drive shaft foot (51).

15. Planetary gear according to one of the preceding claims, **characterized in that** a part of the output shaft (5) that projects from the connecting means (4) is multiedged.

16. Brake, in particular motor vehicle brake and/or parking brake, having a planetary gear of a motor vehicle actuator according to one of the preceding claims.

## Revendications

1. Engrenage planétaire d'un actionneur de véhicule automobile, comprenant un porte-satellites (1) qui comprend un support de satellites (2, 2') servant à retenir des roues satellites et un moyen de liaison (4) relié de manière solidaire en rotation au support de satellites (2, 2'), dans lequel le support de satellites (2, 2') est constitué d'un matériau plus rigide que le moyen de liaison (4), dans lequel le support de satellites se déforme en cas de force ou de couple plus élevé(e) que le moyen de liaison,
**caractérisé en ce que**
le moyen de liaison (4) entoure complètement le support de satellites (2, 2') et relie le support de satellites (2, 2') à un arbre de sortie (5).

2. Engrenage planétaire selon la revendication 1, **caractérisé en ce que** le moyen de liaison (4) est constitué de matière synthétique.

3. Engrenage planétaire selon la revendication 1 ou 2, **caractérisé en ce que** le support de satellites (2, 2') est constitué de métal.

4. Engrenage planétaire selon l'une des revendications 1 à 3, **caractérisé en ce que** le porte-satellites (1) comprend un arbre de sortie (5) constitué de métal, le moyen de liaison (4) étant relié de manière solidaire en rotation au support de satellites (2, 2') et à l'arbre de sortie (5), et le porte-satellites (1) comprenant un support de satellites (2, 2') constitué de métal servant à retenir des roues satellites et le moyen de liaison (4) étant constitué de matière synthétique.

5. Engrenage planétaire selon l'une des revendications précédentes, **caractérisé en ce que** le support de satellites (2, 2') est annulaire.

6. Engrenage planétaire selon l'une des revendications précédentes, **caractérisé en ce que** le support de satellites (2, 2') est relié par complémentarité de forme au moyen de liaison (4).

7. Engrenage planétaire selon l'une des revendications précédentes, **caractérisé en ce que** le support de satellites (2, 2') comprend au moins une denture et le moyen de liaison (4) comprend une contre-denture s'engrenant avec la denture.

8. Engrenage planétaire selon l'une des revendications précédentes, **caractérisé en ce que** le support de satellites (2, 2') comprend au moins un logement (20, 20', 21') servant à loger un axe de satellite (3).

9. Engrenage planétaire selon l'une des revendications précédentes, **caractérisé en ce qu'**un axe de satellite (3) est forcé dans un logement (20, 20', 21') du support de satellites (2, 2').

10. Engrenage planétaire selon l'une des revendications précédentes, **caractérisé en ce que** le support de satellites (2, 2') comprend au moins deux logements (20', 21') servant à loger respectivement un axe de satellite (3), une distance radiale entre un premier logement (20') et un axe médian du support de satellites (2, 2') et une distance radiale entre un deuxième logement (21') et l'axe médian du support de satellites (2, 2') étant différentes.

11. Engrenage planétaire selon l'une des revendications 8 à 10, **caractérisé en ce que** l'axe de satellite (3) est formé sans gorge.

12. Engrenage planétaire selon l'une des revendications précédentes, **caractérisé en ce que** le moyen de liaison (4) est une pièce moulée, en particulier une pièce moulée par injection et/ou le moyen de liaison (4) est une pièce moulée dans laquelle l'arbre de sortie (5) et/ou le support de satellites (2, 2') sont encastrés.

13. Engrenage planétaire selon l'une des revendications précédentes, **caractérisé en ce que** le moyen de liaison (4) est relié par complémentarité de forme à l'arbre de sortie (5).

14. Engrenage planétaire selon l'une des revendications précédentes, **caractérisé en ce que** le moyen de liaison (4) entoure une base d'arbre d'entraînement (51).

15. Engrenage planétaire selon l'une des revendications précédentes, **caractérisé en ce qu'**une partie de l'arbre de sortie (5) faisant saillie à partir du moyen de liaison (4) est polygonale.

16. Frein, en particulier frein de véhicule automobile et/ou frein de stationnement, comprenant un engrenage planétaire d'un actionneur de véhicule automobile selon l'une des revendications précédentes.
